# FASCICULE DE BREVET EUROPEEN

(11) **EP 0 499 023 B1**
(45) Date de publication et mention de la délivrance du brevet: **05.04.1995**
(21) Numéro de dépôt: 92100247.3
(22) Date de dépôt: 09.01.1992
(51) Int. Cl.: A23F 5/50, A23F 5/18

(54) **Procédé pour la production de café instantané soluble en poudre à arôme renforcé**
Verfahren zur Herstellung von löslichem Instant-Kaffeepulver mit verbessertem Aroma
Process for preparing soluble instant coffee powder with enhanced flavour

(30) Priorité: 17.01.1991 CH 119/91
(43) Date de publication de la demande: 19.08.1992
(73) Titulaire: SOCIETE DES PRODUITS NESTLE S.A., 1800 Vevey (CH)
(72) Inventeur: Schlecht, Klaus, CH-1350 Orbe (CH); Wehrspann, Olaf, CH-1350 Orbe (CH)

(56) Documents cités:
- FR-A- 2 130 383
- FR-A- 2 316 879
- US-A- 3 361 571
- US-A- 3 725 082
- US-A- 3 843 823
- TEA AND COFFEE TRADE JOURNAL, vol. 142, no. 1, 1972, pages 42,54-57; S. LEE:"Clarification of beverage coffee"

## Description

La présente invention est relative à un procédé pour la production de café instantané soluble en poudre. Elle a plus particulièrement pour objet un procédé de ce type dans lequel de l'huile de café est récupérée au cours de ce procédé et réincorporée dans la poudre de café pour obtenir un produit à l'arôme renforcé se rapprochant d'un café obtenu directement par la percolation d'eau bouillante au travers d'un lit de café rôti moulu.

La poudre de café soluble est classiquement produite par lyophylisation ou atomisation après l'évaporation d'un extrait de café obtenu par la percolation d'un liquide d'extraction à travers des cellules remplies de café torréfié moulu (Sivetz - Coffee Processing Technology - volume 1 - pages 262, 263 - AVI - 1963).

L'extraction est réalisée à contre courant, c'est-à-dire que de l'eau, sous pression à une température pouvant être comprise entre 150°C et 180°C, est introduite dans la cellule contenant la charge de café torréfié moulu qui a été la plus épuisée en ayant subi N extractions, à la base de celle-ci. L'extrait liquide de cette cellule d'extraction est ensuite amené à traverser la cellule d'extraction contenant la charge de café ayant servi (N-1) fois, cela ainsi de suite jusqu'à ce que l'extrait liquide traverse la cellule qui vient d'être remplie de café torréfié moulu frais.

Bien que l'extrait final obtenu à la sortie de la cellule d'extraction contenant le café le plus frais ne présente qu'une faible quantité de particules de café moulu, des fines étant toujours entraînées il est souhaitable de filtrer cet extrait.

Enfin, après cette phase de filtration qui élimine les particules supérieures à environ 1 mm, il existe encore des matières solides en suspension telles que des polysaccharides qu'il convient d'éliminer afin de permettre, après concentration et lyophylisation ou atomisation de cet extrait, d'obtenir une poudre de café parfaitement soluble et n'engendrant pas l'apparition de matières solides dans la tasse.

Ces matières solides en suspension sont classiquement éliminées par centrifugation.

L'extrait final est alors concentré par évaporation puis transformé en poudre par lyophylisation ou atomisation.

Un des problèmes majeurs de ce type de procédé réside dans le fait que le produit obtenu ne présente pas l'arôme d'un café rôti, ceci étant dû en particulier aux étapes d'évaporation et de lyophylisation ou d'atomisation qui entraînent inévitablement des pertes d'arômes importantes.

Différentes solutions ont été proposées qui consistent soit à pulvériser sur la poudre de café une huile de café, soit à incorporer une huile de café dans un bocal rempli de café soluble en poudre par l'intermédiaire, par exemple, d'une seringue.

L'huile de café utilisée peut être enrichie avec des arômes de café par exemple issus de la récupération des arômes d'un café rôti moulu. On connaît, par exemple par le document US 3.406.074, un procédé de ce type.

Jusqu'à présent l'huile de café classiquement utilisée était obtenue par pressage d'un café rôti moulu, avant extraction, un tel procédé étant par exemple décrit dans GB 1.532.662.

Cette technique de récupération d'huile de café par pressage, si elle permet effectivement de récupérer un produit riche en arôme, entraîne pourtant de façon plus ou moins marquée une odeur de brûlé due aux conditions de température et de pression nécessaire au pressage.

De plus, les arômes très volatils tendent malgré tout à s'échapper. Par ailleurs, l'huile obtenue ne peut être utilisée directement en raison de la proportion importante de particules fines, il est donc nécessaire de purifier cette huile, par exemple par centrifugation.

Enfin, ce procédé génère la formation d'un résidu solide constitué par le café rôti moulu d'où l'huile a été exprimée .

Pour ne pas éliminer ce résidu solide compact qui peut être extrait, il est nécessaire de le broyer afin de pouvoir le réintroduire dans les colonnes d'extraction de café, ceci entraînant d'ailleurs inévitablement une altération du goût du produit final d'autant plus sensible que la proportion de résidu solide recyclé est plus grande par rapport à la quantité totale de café rôti extrait.

Il s'agit donc là d'une technique complexe, par le matériel qu'elle suppose, onéreuse, puisque, si il est désiré de ne pas recycler le résidu solide afin d'éviter une altération de la qualité, le coût du café rôti pressé vient grever le coût en matières premières, et enfin pas totalement satisfaisante au niveau de l'huile obtenue qui, si elle présente une bonne résistance à l'oxydation à l'état brut, présente une nettement moins bonne résistance à l'oxydation une fois désodorisée à la vapeur. Or, cette opération est quasiment obligatoire à cause, d'une part, de l'odeur de brûlé générée et, d'autre part, à cause de l'utilisation de café Robusta afin de diminuer le coût en matières premières. Or, il est bien clair qu'il n'est pas souhaitable d'utiliser directement une huile issue du pressage d'un café rôti Robusta pour l'aromatisation d'un café en poudre produit à partir d'un Arabica.

Pour pallier une partie de ces inconvénients il a été proposé de presser non plus le café rôti moulu avant extraction mais, au contraire, d'utiliser le marc de café, après extraction. On connaît, par exemple par le document US 3.035.921 un procédé de ce type. Là encore, même si ce procédé évite l'utilisation de café rôti non extrait, la technique utilisée est complexe et conduit de plus à une huile qui, à l'état brut, n'est pas aussi stable que celle produite directement à partir de café rôti.

La demanderesse s'est donc posé le problème de pouvoir utiliser un procédé d'aromatisation d'un café en poudre tel que celui décrit dans US 3.406.074 par l'utilisation d'une huile de café qui, d'une part, est encore plus stable que celle produite par pressage d'un café rôti non extrait et qui, d'autre part, est plus simple à obtenir et ne nécessite pas l'utilisation d'une source de matières premières supplémentaire.

Or, il a été trouvé que l'extrait liquide final qui sort des cellules d'extraction présente une quantité d'huile de café comprise entre 0,2% et 0,5% en poids par rapport à la matière solide présente dans l'extrait.

Cette source d'huile, bien qu'apparemment très pauvre, s'est avérée très intéressante.

En effet, par une simple centrifugeuse déshuileuse placée après la centrifugeuse qui sépare les matières en suspension de l'extrait liquide après la phase de filtration, il est possible de récupérer environ 90% de la quantité totale d'huile présente dans cet extrait.

Selon un autre mode de realisation les deux opérations peuvent être réalisées sur un seul dispositif qui sépare les matières en suspension, l'huile et l'extrait liquide.

Or, cette huile, finalement aisément récupérable, présente comme avantages d'être beaucoup plus stable que coutes les huiles de café préalablement connues en étant par ailleurs très aromatique.

La présente invention a ainsi pour objet un procédé pour la production d'un café instantané soluble en poudre dans lequel un liquide d'extraction est amené à circuler à contre courant au travers de cellules d'extraction, l'extrait liquide obtenu étant filtré puis centrifugé avant d'être concentré puis transformé en poudre, dans lequel pendant cette phase de centrifugation, l'huile contenue dans l'extrait liquide est séparée pour être réintroduite dans la poudre de café soluble.

Grâce à l'utilisation de l'huile contenue dans l'extrait liquide il est possible de s'affranchir de l'utilisation d'une source supplémentaire de café rôti, de plus, ce procédé simple, qui s'inscrit dans le cycle normal de la production de la poudre de café, nécessite un minimum d'étapes supplémentaires, enfin, l'huile obtenue est remarquablement plus stable que toutes les huiles de café préalablement connues.

Il est ainsi possible d'obtenir, par ce procédé, une huile d'une pureté comprise entre 96% et 99% ce qui évite d'avoir à procéder à une purification ultérieure, par exemple par centrifugation, contrairement à ce qui se passe dans le cas d'une huile produite par pressage d'un café torréfié moulu.

En outre, il a été découvert qu'il existe une température optimale pour atteindre une récupération maximale de l'huile contenue dans l'extrait. Plus précisément, le rendement optimal est obtenu avec un extrait à une température comprise entre 70°C et 80°C. Selon une caractéristique de l'invention, l'extrait liquide est donc réchauffé à cette température avant de passer dans la centrifugeuse déshuileuse.

Il a été trouvé par ailleurs que, dans certains cas, l'huile obtenue, une fois pulvérisée sur la poudre de café ou injectée par seringue dans un bocal contenant le café en poudre, pouvait entraîner après quelques mois une odeur de marc dans le bocal contenant le café en poudre.

Il peut donc être souhaitable de désodoriser cette huile. Ce traitement peut être réaliser en une ou deux étapes.

Si il est réalisé, en une seule étape, l'huile est désodorisé par distillation à la vapeur d'eau.

Dans cette étape, il est préférablement utilisé un rapport pondéral vapeur/huile de 50:1 et un temps de résidence de l'huile de une heure dans une colonne de distillation à dix plateaux. Ce traitement permet d'obtenir une huile organoleptiquement neutre. La fraction d'eau condensée dans l'huile est ensuite séparée par centrifugation.

Pourtant, il a été trouvé que si on désodorisait directement l'huile brute de centrifugation, il se formait parfois un précipité dans le dispositif, d'où la nécessité, dans ce cas, de dégommer préalablement.

C'est pourquoi, dans une étape préalable optionnelle, la quantité de gommes présentes dans l'huile est réduite par injection de vapeur d'eau à grande vitesse. Dans cette étape, de la vapeur d'eau, à 140°C sous 3 - 4 bar, est injectée dans l'huile entraînant une augmentation immédiate de la température de l'huile qui est maintenue pendant deux à trois minutes. L'huile est ensuite refroidie rapidement à 90° - 100°C et les gommes ayant précipitées ainsi que l'eau sont éliminées, par exemple, par centrifugation. L'huile subit ensuite le traitement de désodorisation mentionné ci-dessus.

L'huile de l'extrait liquide, éventuellement désodorisée selon le procédé décrit ci-avant, est ensuite pulvérisée sur une poudre de café ou injectée dans un bocal contenant la poudre de café après avoir été, si nécessaire, enrichie en arômes de café.

Il est ainsi réalisé un café soluble en poudre sur lequel a été fixé une huile aromatique qui confère au produit obtenu des qualités organoleptiques stables.

Les exemples ci-après illustreront les caractéristiques de l'huile ainsi que ces propriétés en comparaison avec les huiles de café existant jusque là.

### Exemple 1 :

Cet exemple illustre la stabilité de l'huile produite par rapport aux autres huiles de café connues. Il s'agit d'un test de résistance à l'oxydation selon la méthode Rancimat à 130°C. Selon ce test, un débit déterminé d'air très pur traverse l'échantillon d'huile chauffée à la température voulue. Les produits d'oxydation volatiles tels que les acides organiques et les aldehydes sont entraînés avec le flux d'air dans un dispositif rempli d'eau distillée où ils se dissolvent dans l'eau. Dans ce dispositif, la conductivité de l'eau, qui est fonction de la quantité de produits d'oxydation dissouts, est mesurée et enregistrée en continu. La courbe d'augmentation de la conductivité permet de déterminer un facteur de stabilité exprimé en heures pour une température donnée.

Des mesures ont été faites à la fois sur des huiles brutes et des huiles désodorisées à la vapeur.

| Huile | Stabilité (en heures) |
|---|---|
| Huile de l'invention | 12,9 |
| Huile de l'invention désodorisée | 10,6 |
| Huile de marc | 7,3 |
| Huile de marc désodorisée | 4,1 |
| Huile de marc séché pressé | 2 |
| Huile de marc séché pressé désodorisé | 1,8 |
| Huile de café rôti pressé | 9,8 |
| Huile de café rôti pressé désodorisé | 3,9 |

### Exemple 2 :

Cet exemple illustre la teneur en carbone organique total (exprimée en mg par 100 g de matière sèche) de la fraction volatile distillée à la vapeur et condensée, de différentes huiles.

La teneur en carbone organique total est fonction de la teneur en arômes et est donc le reflet de la richesse d'une huile en arômes.

| Huile | Teneur en carbone organique total |
|---|---|
| Huile de l'invention | 281 |
| Huile de marc | 19 |
| Huile de café rôti | 573 |

Il apparaît ainsi clairement que cette huile, si elle n'est pas la plus aromatique est quand même très riche en arômes.

### Exemple 3 :

Cet exemple illustre l'influence de la température de l'extrait liquide traité sur la quantité d'huile récupérée par rapport à la quantité d'huile contenue dans l'extrait.

| Température (°C) | Pourcentage d'huile récupérée |
|---|---|
| 30 | 49% |
| 50 | 76% |
| 70 | 90% |
| 80 | 90% |

## Revendications

1. Procédé pour la production d'un café instantané soluble en poudre dans lequel un liquide d'extraction est amené à circuler à contre courant au travers de cellules d'extraction , l'extrait liquide obtenu étant filtré puis centrifugé avant d'être concentré puis transformé en poudre, dans lequel pendant cette phase de centrifugation, l'huile contenue dans l'extrait liquide est séparée pour être réintroduite dans la poudre de café soluble.

2. Procédé selon la revendication 1, dans lequel l'extrait liquide, après filtration et avant centrifugation, est réchauffé.

3. Procédé selon la revendication 1, dans lequel l'huile obtenue est désodorisée avant d'être réintroduite dans la poudre de café soluble.

4. Procédé selon la revendication 1 dans lequel l'huile obtenue subit d'abord un dégommage en étant ensuite désodorisée par distillation à la vapeur d'eau.

## Claims

1. A process for the production of a soluble instant coffee in powder form in which an extraction liquid is circulated in countercurrent through extraction cells, the liquid extract obtained being filtered and then centrifuged before being concentrated and subsequently converted into powder form, in which the oil contained in the liquid extract is separated during this centrifugation phase so that it can be reintroduced into the soluble coffee powder.

2. A process as claimed in claim 1, in which the liquid extract is reheated after filtration and before centrifugation.

3. A process as claimed in claim 1, in which the oil obtained is deodorized before reintroduction into the soluble coffee powder.

4. A process as claimed in claim 1, in which the oil obtained is first degummed and then deodorized by distillation with steam.

## Patentansprüche

1. Verfahren zur Herstellung von löslichem Instant-Kaffeepulver, worin eine Extraktionsflüssigkeit im Gegenstrom durch Extraktionszellen im Kreislauf geführt wird, der erhaltene flüssige Extrakt filtriert und danach zentrifugiert wird, bevor er konzentriert und anschließend in ein Pulver übergeführt wird, wobei während dieser Phase des Zentrifugierens das im flüssigen Extrakt enthaltene Öl abgetrennt wird, um in das lösliche Kaffeepulver wieder eingebracht zu werden.

2. Verfahren nach Anspruch 1, worin der flüssige Extrakt nach dem Filtrieren und vor dem Zentrifugieren wieder erwärmt wird.

3. Verfahren nach Anspruch 1, worin das erhaltene Öl desodorisiert wird, bevor es wieder in das lösliche Kaffeepulver eingebracht wird.

4. Verfahren nach Anspruch 1, worin das erhaltene Öl zunächst einem Entgummieren unterzogen wird und anschließend durch Wasserdampfdestillation desodorisiert wird.
